# EUROPEAN PATENT APPLICATION

(11) **EP 2 511 750 A1**
(43) Date of publication of application: **17.10.2012**
(21) Application number: 11162531.5
(22) Date of filing: 15.04.2011
(51) Int. Cl.: G02B 27/01

(54) **Vehicular information display system**

(71) Applicant: Volvo Car Corporation, 40 531 Göteborg (SE)
(72) Inventor: Larsson, Annika, 41714, Göteborg (SE)

(57) **Abstract**

An information display system for a vehicle wherein an information image is adapted to be displayed inside the vehicle to a passenger comprising a projector assembly installed in the vehicle, and a window of a vehicle. A display pattern is arranged on the window, such that the information image can be projected and displayed on the display pattern to the passenger.

## Description

### TECHNICAL FIELD

The present invention relates to the field of presenting and displaying information, such as images or video sequence, inside a vehicle.

### BACKGROUND

Today, there exist various examples of arrangements for presenting and displaying information to the driver and/or to the passengers of a vehicle.

These arrangements generally refer to display screens arranged on the dashboard or the instrument panel, in front of the driver. Display arrangements have been proposed which displays information on a predetermined section adjacent the front windshield in front of the driver. However, these known arrangements are restricted to presenting and displaying vehicle information to the driver either adjacent the front windshield or on a display screen in front of the driver. However, this vehicle information is restricted to vehicle information such as speed fuel, clocks and other indicators for vehicle driving.

Further, there exist various examples of vehicle navigation display systems which provide the driver and/or the passengers with navigational information on a display screen in front of either the driver or the passenger. However, these known systems are restricted to presenting and displaying navigational information for the vehicle on a display screen making it difficult to compare the navigational information on the display screen to the outside surroundings around the vehicle. Further, these known vehicle navigation display systems are mainly restricted in providing navigational information for the vehicle to the driver of the vehicle. There is no or relatively little navigational information for the vehicle to the passengers of the vehicle.

Thereby, it is difficult for the passengers to compare and connect the navigational information on the display screen with information of or information corresponding to the outside surroundings around the vehicle.

There is thus a need for an improved information display system removing the above mentioned disadvantages.

### DESCRIPTION OF INVENTION

The present invention relates to the field of presenting and displaying information to the passengers inside a vehicle. More specifically, the present invention relates to a vehicular information display system which utilizes a vehiclee window as a display screen for projected information from a picture projector. It is desirable to provide the passenger with information of the outside surroundings around the vehicle simultaneously as the passenger is able to see the actual outside surroundings.

The object of the present invention is to suggest an improved and easy to implement information display system for a vehicle which improves the information flow of the outside surroundings around the vehicle to the passengers. The information can be any type of information such as for example TV, a film, the internet or information directly relating to the outside surroundings of the vehicle. The information is projected and displayed onto the vehicle window to the passenger as one or more information images by one or more projectors.

The present invention is defined by the appended independent claims. Various examples of the invention are set forth by the appended dependent claims as well as by the following description and the accompanying drawings.

With the above description in mind, then, an aspect of the present invention is to provide an improved solution of presenting and displaying information images to the passengers which seeks to mitigate, alleviate, or eliminate one or more of the above-identified deficiencies in the art and disadvantages singly or in any combination.

The object is achieved by the features of claim 1 wherein, an information display system for a vehicle wherein an information image is adapted to be displayed inside the vehicle to a passenger comprising a projector assembly installed in the vehicle, and a window of a vehicle, characterised in that a display pattern is arranged on the inside of the window, such that the information image can be projected and displayed on the display pattern to the passenger, the display pattern comprising an opaque pattern partly covering the rear side window. Thereby, the inventive information display system provides a partly transparent window looking from the inside of the vehicle and the appearance of a relatively non-transparent window looking from the outside of the vehicle. Since it normally is darker inside the vehicle than outside the vehicle, it appears from the outside of the vehicle that the window is provided with a relatively non-transparent sun or light protecting film. Thus, due to normal lighting relation between an inside compartment of the vehicle and the outside surroundings a relatively low transparency can be provided when looking from the outside of the vehicle trough the window into the vehicle. Due to normal lighting relation between the inside compartment of the vehicle and the outside surroundings, the inventive information display system can also provide a relatively high transparency from the inside of the vehicle through the window out from the vehicle and simultaneously enabling the projection and displaying of information about the outside surroundings onto the display pattern. According to a further advantageous aspect of the invention, the opaque pattern is partly covering the window in a substantially symmetrical manner. No additional parts or space is required in the inventive information display system in order to provide the passengers with information about the outside surroundings.

According to a further advantageous aspect of the invention, the display pattern may cover only a part of the window, wherein the display pattern can be located in any suitable location on window, for example in the centre or in the corners of the window.

Advantegeously, the display pattern is arranged on a front window, a front side, a rear side and/or a rear window, or a part thereof. More alternatively, the display pattern is a print screen or a laminate arranged onto said window, or part there of. The print screen or laminate is arranged onto the window inside the vehicle, between the glasses of the vehicle or onto the window outside the vehicle. The display pattern is see-through from the inside, but working as an optical filter from the outside.

According to a further advantageous aspect of the invention, the information image being projected and displayed on the display pattern to the passenger is superimposed on the background which may show the actual outside surroundings, the background being visible to the passenger through the display pattern. The one or more projectors can be provided and arranged inside the vehicle such that they can be directed towards any suitable vehicle window or part thereof inside the vehicle. For example, the one or more projectors can be located on the inside of the roof of the vehicle, or on a seat or seats inside the vehicle.

According to a further advantageous aspect of the invention the opaque pattern is a print screen having openings. The opaque pattern may for instance be a print screen having openings wherein the surface between the openings is opaque and constitute the display pattern onto which information images can be projected and displayed to the passenger. According to a further advantageous aspect of the invention, the openings are circular square or triangular. However, the openings may be of any type of suitable geometrical form. According to a further advantageous aspect of the invention, the openings are of the same size. According to a further advantageous aspect of the invention, the openings are of different size.

According to a further advantageous aspect of the invention, the opaque pattern comprises opaque dots. According to a further advantageous aspect of the invention, the opaque dots may for example be circular or square or triangular. The opaque dots may be of any type of suitable geometrical form. According to a further advantageous aspect of the invention, the opaque dots are of the same size. According to a further advantageous aspect of the invention, the opaque dots are of a different size.

According to a further advantageous aspect of the invention, the size of the opaque dots can continuously differ towards all the edges of the window. Such a pattern can give a transition section of the window between the display pattern and a window frame. According to a further advantageous aspect of the invention, the size of the opaque dots is smaller at the edges of the window. According to a further advantageous aspect of the invention, the size of the opaque dots is larger at the edges of the window. Normally, the opaque dots are of the same size throughout the window and differ in size in the transition sections adjacent the edges providing for a smooth transition between the window and the window frame.

According to a further advantageous aspect of the invention, the information image is based on the geographical location of the vehicle. According to a further advantageous aspect of the invention, the information image is obtained by a navigation system. The navigational system is arranged to be in connection with the one or more projectors such that information can be transferred from the navigational system via the one or more projectors and onto the display pattern arranged on the inside of the windows. According to a further advantageous aspect of the invention, the navigation system can be a GPS. According to a further advantageous aspect of the invention, the navigation system can be an inertial navigation system.

According to a further advantageous aspect of the invention, the information image corresponds to an actual geographic subject that can be seen through the display pattern. Thereby, enabling the passengers to directly compare and connect the information image projected on the display pattern with the actual geographic subject that is seen through the display pattern. Further, information which has been display on the display pattern can be saved on a memory.

According to a further advantageous aspect of the invention, the passenger can select which type of geographic subject is to be projected and displayed on the display pattern to the passenger. This can for example be done by using an input device in the information display system or by using an existing user interface.

According to a further advantageous aspect of the invention, the information image is movable along the display pattern arranged on the window in relation to the movement of the vehicle.

According to a further advantageous aspect of the invention, a display surface relation between a display pattern surface and a window surface is at least 10 percent, preferably in the range of 30 to 80 percent, more preferably in the range of 40 to 70 percent, and most preferably in the range of 50 to 60 percent. The display pattern surface is either the display surface of the print screen between the openings or the display surface of the opaque dots. The window surface is the total inside surface of the rear window.

According to a further advantageous aspect of the invention, the display pattern can also function as a sun or light protecting film.

Any of the advantageous features of the present invention above may be combined in any suitable way.

A number of advantages are provided by means of the present invention, for example:
- providing a solution with the possibility to see information images projected on the display pattern and at the same time being able to see the outside surroundings around the vehicle is obtained;
- an improved information display system for the passenger is obtained allowing for more information to the passengers,
- simplified installation and maintenance is allowed.

### BRIEF DESCRIPTION OF THE DRAWINGS

The present invention will now be described in detail with reference to the figures, wherein:
Fig. 1 schematically shows a pictorial representation of vehicle comprising a window according to the invention.
Fig. 2 schematically shows a pictorial representation of a projection of a geographical subject according to the invention.
Fig. 3 schematically shows a pictorial representation of the display pattern according to the invention.
Fig. 4 schematically shows a pictorial representation of a first transition display pattern according to the invention.
Fig. 5 schematically shows a pictorial representation of a second transition display pattern according to the invention.

It should be added that the following description of the examples is for illustration purposes only and should not be interpreted as limiting the invention exclusively to these examples/aspects.

### DETAILED DESCRIPTION

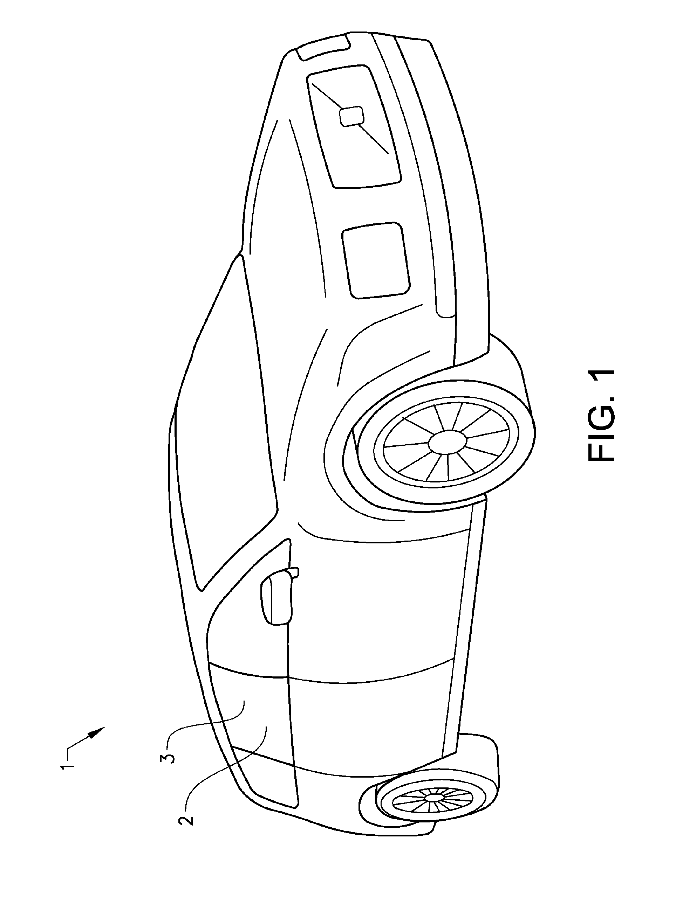

All the figures 1 to 5 are schematically illustrated.

The following examples of the present invention relate, in general, to the field of presenting and displaying information to the passengers inside a vehicle, in particularly, to information display systems using windows in a vehicle for presenting and displaying information to the passengers.

Examples of the present invention will be described more fully hereinafter with reference to the accompanying drawings, in which examples of the invention are shown. This invention may, however, be embodied in many different forms and should not be construed as limited to the examples set forth herein. Rather, these examples are provided so that this disclosure will be thorough and complete, and will fully convey the scope of the invention to those skilled in the art. Like reference signs refer to like elements throughout.

Figure 1 shows an example of a vehicle 1 having an information display system according to the invention. The vehicle 1 comprises a first window 2 having a first outside surface 3 and a second window (not shown) having a second outside surface (not shown).

In a preferred embodiment of the invention, the window is constituted of a rear side window for a passenger located in the rear of the vehicle compartment. Hereinafter, the window is referred to a rear side window 2 of a vehicle.

The first and second insides of these rear side windows 2 are provided with a display pattern comprising opaque dots which functions as display screens.

The opaque dots of the display pattern are preferably printed on the rear side windows 2 or are laminated to the rear side windows. However, the opaque dots may also be made of any suitable material. One or more projectors (not shown) are provided inside the vehicle 1. These one or more projectors project and display movable information images onto the display pattern arranged on the insides of the first and second rear side windows.

In s preferred embodiment, the display pattern is constitued of a so called print screen arranged to the window 2 of the vehicle, or a part thereof. The printscreen could be arranged with openings for be able to see the surroundings around the vehicle. In another emodiment, the window 2 may also be provided with a laminate, on which it is possible to project an information image so that the laminate adopts the informations image. The laminate may be arranged on the inside of the vehicle window 2, between the glasses of the vehicle window 2 or on the outside of the vehicle window 2.

The projectors can display information images including for example images from TV, film or the internet. The projectors can also present and display information in the form of information images related to the outside surroundings onto the display pattern. The projectors can be arranged to be connected to a navigation system, such that the information image can be based on the geographical location of the vehicle 1. For example, if the vehicle 1 passes an actual geographical subject which for example is a museum or a bridge, information relating to this actual geographical subject can be presented and displayed onto the display pattern to the passengers. This type of information can be any type of additional information such as opening hours, prices, shows or phone numbers related to the actual geographical subject. Thus, the passengers can simultaneously see the actual surroundings with the actual geographical subjects around the vehicle and the projected information images of the actual geographical subjects together with additional information relating to the actual geographical subjects. Thereby, the present invention can function as an information guide or a travel guide providing the passengers with additional information about the outside surroundings around the vehicle and the passengers do not need to look away from the rear side window to receive the additional information.

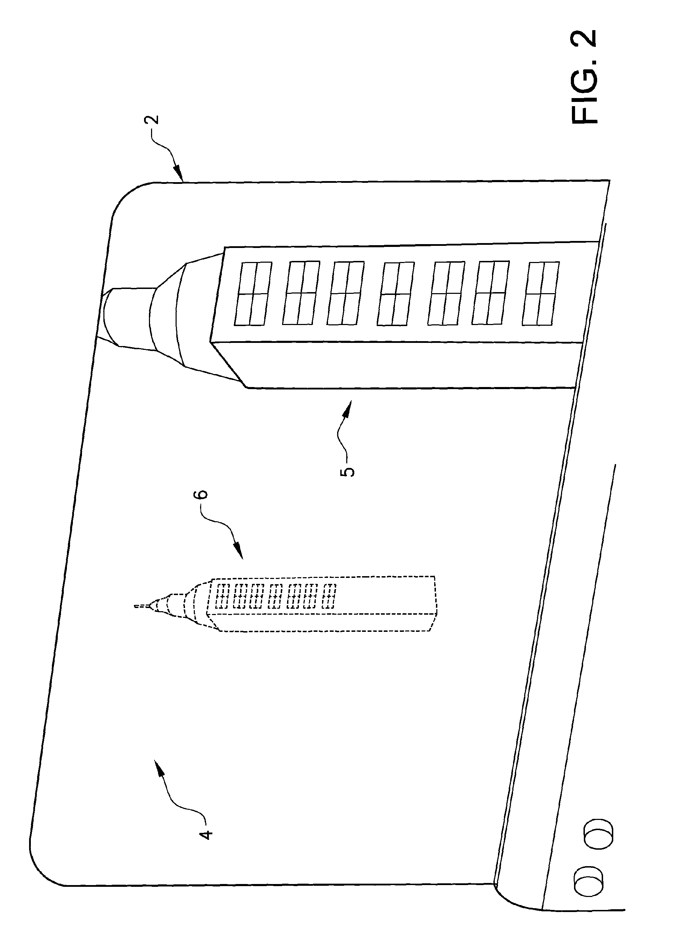

Figure 2 shows an information image 6 projected on a first inside surface 4 arranged on the first rear side window 2. The information image 6 can for example be only an image or only text information or an image and text information or figures. The information image 6 is projected onto the display pattern arranged on the first inside rear side window 4. The information image 6 corresponds to an actual geographical subject 5 which can be seen through the first rear side window 2.

Additional information relating to the actual geographical subject 5 can also be presented and displayed to the passengers. From the outside of the vehicle 1, it may appear that the first rear side window 2 is provided with a sun or light protecting film. On the inside of the vehicle 1, in the vehicle compartment, it is possible to see the surroundings around the vehicle 1 between the opaque dots of the display pattern. This enables the passengers to easily compare and connect the information image 6 with the actual geographical subject 5. Further, this enables the passengers to easily compare and connect the information image 6 having additional information with the actual geographical subject 5.

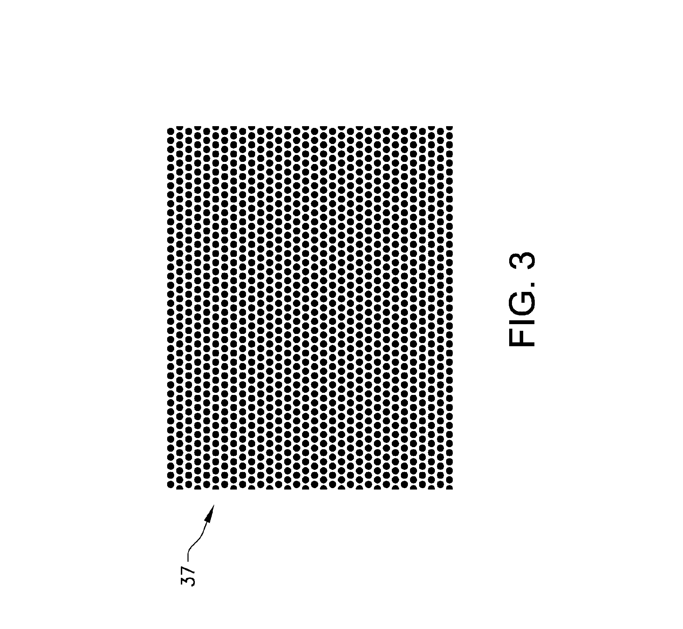

Figure 3 shows an example of a display pattern 37 arranged on the inside of the first rear side window according to the invention. The first display pattern 37 comprises several opaque dots where the opaque dots are of the same size and where the distance between them are the same. However, the size of the opaque dots may be varied and the distance between the opaque dots may be varied. There is no visible projection between the opaque dots. The relation between the surface of the display pattern 37 and surface of the first rear side window is adaptable.

Normally, the opaque dots are of a silver or gray or dark colour, looking from the outside of the vehicle and of a light or white colour, looking from the inside of the vehicle. However, the colour of the opaque dots may be varied.

The colour of the opaque dots can also be the same looking from both the inside and the outside of the vehicle. The display pattern 37 can comprise of transition display patterns at the edges of the display pattern 37, i.e. at the edges of the first rear side window.

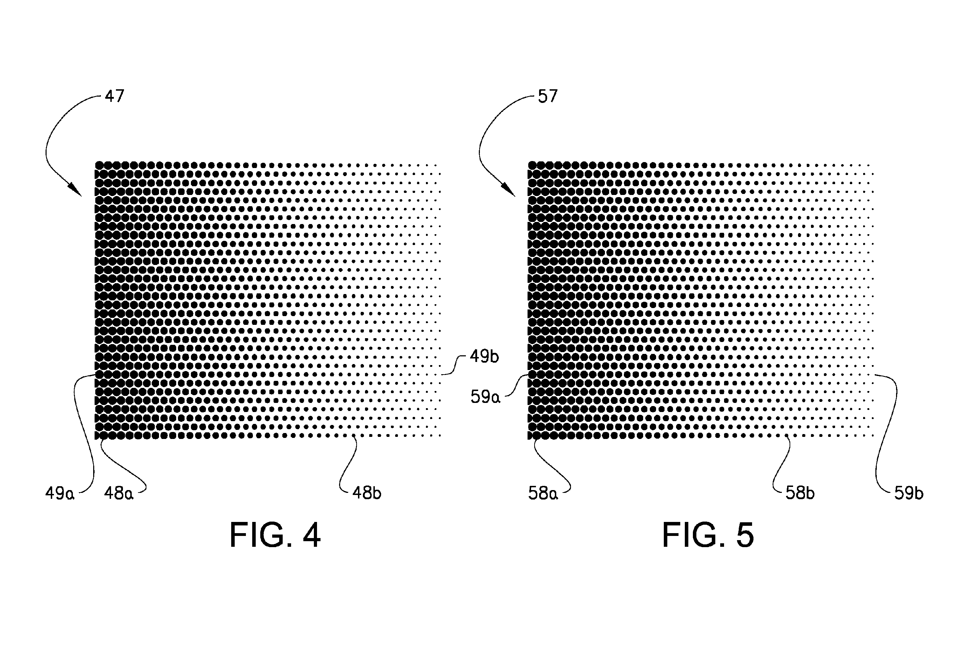

Figure 4 shows an example of a first transition display pattern 47 arranged on the inside of the first rear side window adjacent the window frame according to the invention. Referring to figure 4, a first opaque dot 48a at a first side 49a of the first transition display pattern 47 is larger than a second opaque dot 48b at a second side 49b of the first transition display pattern 47. The first side 49a is closer to the centre of the first rear side window than the second side 49b. The second side 49b of the first transition display pattern 47 coincides with an edge of the first rear side window. The opaque dots are fading towards the edges of the first rear side window, i.e. the size of the opaque dots is decreasing towards the edges of the first rear side window.

Figure 5 shows an example of a second transition display pattern 57 arranged on the inside of the second rear side window adjacent the window frame according to the invention. Referring to figure 5, a third opaque dot 58a at a third side 59a of the second transition display pattern 57 is larger than a fourth opaque dot 58b at a fourth side 59b of the second transition display pattern 57, i.e. the size of the opaque dots are increasing towards the edges of the second rear side window. The fourth side 59b is closer to the centre of the first rear side window than the third side 59a. The third side 59a of the second transition display pattern 57 coincides with the edge of the second rear side window.

All rear side windows for a vehicle may comprise of the display pattern having the first transition display pattern. All rear side windows for a vehicle may comprise of the display pattern having the second transition display pattern. The rear side windows for a vehicle according to the invention may comprise of either only the display pattern having the first transition display pattern or the display pattern having the second transition display pattern or an arbitrary combination of them both.

The information display system according to the invention may be used in any type appropriate vehicle in the form of, for example, a car, a truck, a bus or other vehicle.

The invention is not limited to the example described above, but may be modified without departing from the scope of the claims below.

The terminology used herein is for the purpose of describing particular examples only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred examples and modes of operation of the present invention. However, the invention should be regarded as illustrative rather than restrictive, and not as being limited to the particular examples discussed above. The different features of the various examples of the invention can be combined in other combinations than those explicitly described. It should therefore be appreciated that variations may be made in those examples by those skilled in the art without departing from the scope of the present invention as defined by the following claims.

### REFERENCE SIGNS

- 1 :: Vehicle
- 2:: Window
- 3:: First outside surface
- 4:: First inside surface
- 5:: Actual geographical subject
- 6:: Information image

- 37:: Display pattern

- 47:: First transition display pattern
- 48a:: First dot
- 48b:: Second dot
- 49a:: First side
- 49b:: Second side

- 57:: Second transition display pattern
- 58a:: Third dot
- 58b:: Fourth dot
- 59a:: Third side
- 59b:: Fourth side

## Claims

1. An information display system for a vehicle wherein an information image is adapted to be displayed in the the vehicle to a passenger comprising:
a projector assembly installed in the vehicle, and
a window of a vehicle,
**characterised in that** a display pattern is arranged onto the window, such that the information image can be projected and displayed onto the display pattern to the passenger.

2. The system according to claim 1, **characterised in** the display pattern comprising an opaque pattern completely or partly covering the window in a symmetrical manner.

3. The system according to any of the claims 1, **characterised in that** the display pattern is a print screen, with or without openings.

4. The system according to claim 1 or 2, **characterised in that** the opaque pattern comprising opaque dots.

5. The system according to claim 1, 2 or 4, **characterised in that** the opaque dots are circular, square or triangular.

6. The system according to any of the claims 1, 2 or 4-5, **characterised in that** the opaque dots are of a different size.

7. The system according to claim 1, **characterised in that** the display pattern is arranged on a front window, a front side, a rear side and/or a rear window, or a part thereof.

8. The system according to any of the previous claims, **characterised in that** the information image is based on the geographical location of the vehicle.

9. The system according to any of the previous claims, **characterised in that** the information image is obtained by a navigation system.

10. The system according to claim 9, **characterised in that** the navigation system is a GPS.

11. The system according to claim 9, **characterised in that** the navigation system is an inertial navigation system.

12. The system according to any of the previous claims, **characterised in that** the information image being projected and displayed on the display pattern to the passenger is superimposed on the background, the background being visible to the passenger through the display pattern.

13. The system according to any of the previous claims, **characterised in that** the information image corresponds to an actual geographic subject that can be seen through the display pattern.

14. The system according to any of the previous claims, **characterised in that** the passenger can select which type of geographic subject is to be projected and displayed on the display pattern to the passenger.

15. The system according to any of the previous claims, **characterised in that** the information image is movable along the display pattern arranged on the inside of the window in relation to the movement of the vehicle.

16. The system according to any of the previous claims, **characterised in that** a display surface relation between a display pattern surface and a window surface is at least 10 percent, preferably in the range of 30 to 80 percent, more preferably in the range of 40 to 70 percent, most preferably in the range of 50 to 60 percent.

17. The system according to any of the previous claims, **characterised in that** the display pattern functions as a sun or light protecting film.

18. The system according to any of the previous claims, **characterised in that** the display pattern is see-through from the inside, but working as an optical filter from the outside.

19. Vehicle comprising a system according to claim 1.
